# EUROPÄISCHE PATENTSCHRIFT

(11) **EP 0 543 047 B1**
(45) Veröffentlichungstag und Bekanntmachung des Hinweises auf die Patenterteilung: **01.03.1995**
(21) Anmeldenummer: 91119916.4
(22) Anmeldetag: 22.11.1991
(51) Int. Cl.: B03B 9/06

(54) **Verfahren und Vorrichtung zur Reinigung von Bauschutt**
Method and device for cleaning of rubble
Procédé et dispositif pour le nettoyage de décombres

(43) Veröffentlichungstag der Anmeldung: 26.05.1993
(73) Patentinhaber: ECOTECHNIEK BV, NL-3606 AZ Maarsen (NL)
(72) Erfinder: Pos, Jacobus, NL-7141 VE Groenlo (NL)
(74) Vertreter: Habbel, Hans-Georg

(56) Entgegenhaltungen:
- EP-A- 0 108 326
- EP-A- 0 325 159
- DE-A- 2 161 310
- DE-A- 4 027 879
- DE-A- 4 027 880
- NL-A- 8 201 829
- AUFBEREITUNGS TECHNIK. Bd. 28, Nr. 8, August 1987, WIESBADEN DE Seiten 443 -449; HECKÖTTER: 'BAUSCHUTTAUFBEREITUNG'
- PT CIVIELE TECHNIEK. Bd. 40, Nr. 9, September 1985, RIJSWIJK NL Seiten 24 - 29;VAN GEMERT ET AL: 'REINIGINGSINSTALLATIE VOOR VERVUILDE GROND'
- AUFBEREITUNGS TECHNIK. Bd. 32, Nr. 6, Juni 1991, WIESBADEN DE Seiten 294 - 302;NEESSE ET AL: 'FEST/FLÜSSIG-TRENNUNG FÜR DIE ENTSORGUNG IN BODENWASCHANLAGEN'

## Beschreibung

Die Erfindung bezieht sich auf ein Verfahren nach dem Oberbegriff des Anspruches 1, wie es zum weit verbreiteten Stand der Technik gehört (s. z. B. "Aufbereitungs-Technik" Nr. 8/987, Seiten 443, 446 und 447). Weiterhin betrifft die Erfindung eine Vorrichtung nach dem Oberbegriff des Anspruches 3, wie sie beispielsweise aus der DE-A-21 61 310 bekannt ist.

Die Reinigung von Bauschutt stellt insbesondere für die Bauindustrie ein großes Problem dar. Sande aus Bauschutt, die ungereinigt verarbeitet werden sollen, sind häufig nicht dazu geeignet, in Beton verarbeitet zu werden, da ihre Oberfläche feinste Verunreinigungen in Form von Staub od. dgl. aufweist, die das Einbinden der einzelnen Körner in den Beton verhindert.

Weiterhin ist die Reinigung von Bauschutt problematisch, wie er beispielsweise beim Abreißen von Gebäuden anfällt oder bei der Zerkleinerung alter Steine. Die dabei anfallenden Sande können je nach den regional geltenden Vorschriften aufgrund ihrer Verunreinigungen möglicherweise nicht auf eine Deponie für normale Abfälle entsorgt werden, sondern sie müssen als Sondermüll entsorgt werden. Dies ist mit entsprechend hohen Kosten verbunden. Die Reinigung der Altsande ist daher wünschenswert, um den Umfang der als Sondermüll anfallenden Abfälle zu verringern. Neben chemischen Verunreinigungen weist der Bauschutt aber auch Holzsplitter und andere physikalische Verunreinigungen auf.

Herkömmliche Verfahren zur Reinigung von Bauschutt trennen zunächst grobere, dann mittlere Korngrößen aus dem Sandgemisch ab. Der verbleibende Feinsand trübt gemeinsam mit Verunreinigungen, wie beispielsweise Schwermetallen oder Polyaromaten, das Restwasser und wird gemeinsam mit diesen Verunreinigungen aus dem Restwasser entfernt. Die Abfallmenge, die auf eine Sondermülldeponie gegeben werden muß, umfaßt demnach sowohl die eigentlichen Verunreinigungen als auch den Feinsand, so daß zum einen der Platzbedarf auf den Deponien und damit auch die Deponiekosten entsprechend hoch sind und zum anderen der Feinsand nicht wiederverwendet oder weiterverkauft werden kann.

Die nach Anspruch 3 gattungsgemäßen Vorrichtungen, die innerhalb des erfindungsgemäßen Verfahrens eingesetzt werden können, um Feinsandanteile und Verunreinigungen aus dem Wasser zu entfernen, weisen einen Wasserspiegel innerhalb des Behälters auf, der oberhalb des obersten Lamellenpaketes verläuft. Aufschwimmende Feststoffe können - wie dies beispielsweise aus der EP-A-0 108 326 bekannt ist - durch Schaber abgezogen werden, welche im Abstand oberhalb von einer einzigen Lamellenpackung angeordnet sind.

Wenn Feststoffe, die sich am Behältertiefsten abgesetzt haben, abgezogen werden, läuft ein Druckstoß durch den gesamten Behälterinhalt und verursacht Turbulenzen des Wassers. Eine möglichst gleichmäßige und damit effektive Abscheidung von Flocken wird durch diese Bewegungen des Wassers bei den gattungsgemäßen Vorrichtungen verhindert.

Sowohl bei den aufschwimmenden als auch bei den abgesunkenen Verunreinigungen kommt es durch Verwirbelungen zu Vermischungen von Wasser und diesen Stoffen, so daß der Trockengrad der flotierten oder sedimentierten Abfallstoffe eingeschränkt wird. Sowohl für das Recycling von Stoffen, die dem Wasser entzogen wurden, als auch für die Deponieentsorgung derartiger Stoffe ist der Wasseranteil unerwünscht, da er entweder eine Verunreinigung des Abfallstoffes darstellt, der wieder aufgearbeitet werden soll, oder ein Mehrgewicht für den zu deponierenden Abfallstoff darstellt, wodurch die Deponiekosten angehoben werden.

Der Erfindung liegt daher die Aufgabe zugrunde, einen möglichst hohen Anteil von Feststoffen und Verunreinigungen aus dem Wasser zu entfernen und dabei den Wasseranteil in diesen abgezogenen Stoffen so gering wie möglich zu halten.

Diese der Erfindung zugrundeliegende Aufgabe wird durch die Ausgestaltung des Verfahrens nach Anspruch 1 und durch die Ausgestaltung der Vorrichtung gemäß Anspruch 3 gelöst.

Die Erfindung schlägt mit anderen Worten vor, der üblichen Abscheidung groberer und mittlerer Korngrößen eine Feinsandabscheidung nachzuschalten, bei der in einem Separator der Feinsand abgesetzt wird und lediglich die restlichen Verunreinigungen im Wasser gehalten werden. Der dabei erfindungsgemäß verwendete Separator für die Feinsandabscheidung ist an sich bekannt, beispielsweise aus der Lebensmittelindustrie. Zum Beispiel werden derartige Separatoren in Schlachthöfen eingesetzt, um freie Öle und Fette sowie andere Schwebstoffe aus dem Wasser zu entfernen, mit dem die Schlachthöfe saubergehalten werden. Völlig überraschend hat sich in der Praxis gezeigt, daß mit Hilfe derartiger Separatoren Feinsande und Feinstsande aus dem Wasser geschieden werden können, deren Entfernbarkeit aus dem Wasser vorher als nahezu unmöglich angesehen wurde.

Weiterhin schlägt die Erfindung vor, die restlichen Verunreinigungen zu Flocken zusammenzufassen und Gas in das Wasser einzuleiten, um die Flocken zu flotieren.

Hierdurch bietet die erfindungsgemäße Vorrichtung durch die obersten Lamellen, die über die Wasseroberfläche hinaus nach oben gezogen sind, eine in viele Kammern unterteilte Wasseroberfläche. Eine derartige Oberfläche beruhigt sich in sehr viel kürzerer Zeit als eine große offene Wasseroberfläche. Bei Ablassen der sedimentierten Verunreinigungen, die zu einem gewissen Maß auch beim Betrieb der Vorrichtung als Flotationsanlage anfallen, bewirkt der durch das Becken laufende Druckstoß daher nicht so große und nachhaltige Turbulenzen, wie bei den bislang bekannten Vorrichtungen.

Zudem gewährleisten die über die Wasseroberfläche hinaus nach oben geführten Lamellen, daß flotierte Flocken über die Wasseroberfläche hinaus nach oben angehoben werden durch die nachfolgend aufschwimmenden Flocken, die die weiter oben befindlichen Flocken nach oben drücken. Da die oberen Flocken nicht von Wasser umgeben sind, wird im Bereich der Lamellen oberhalb des Wasserspiegels eine Trocknung der Flocken erzielt, die den Wasseranteil in den Flocken erheblich vermindert und einen sehr hohen Trockenanteil in den Flocken gewährleistet. Dieser Trocknungseffekt wird durch den Verdichtungsdruck unterstützt, den die nachfolgend aufschwimmenden Flocken auf die jeweils oberen Flocken ausüben. Oberhalb der Lamellen sind Kratzeinrichtungen angeordnet, die das Trockenprodukt entfernen.

Weiterhin kann eine möglichst ruhige Strömungsausbildung innerhalb der Vorrichtung erzielt werden, die einen möglichst hohen Abscheidegrad und dabei einen möglichst hohen Trockenanteil in der Abscheidemasse unterstützt. Diese ruhige Strömung kann durch eine konisch nach unten verjüngende Form des Absinkbeckens erzielt werden, das in seinem untersten Bereich als Sammelrinne ausgebildet ist, in dem eine Förderschnecke zum Abfördern abgesunkener Stoffe angeordnet ist.

Die Förderschnecke erstreckt sich beispielsweise in einen Ablaufstutzen hinein, den sie mit ihrem Querschnitt nahezu vollständig ausfüllt. Beim Öffnen des Auslasses für die sedimentierten Stoffe werden beim Stand der Technik häufig ein oder mehrere am Behältertiefsten angeordnete Stutzen geöffnet. Dabei reißt das ausfließende Wasser die sedimentierten Verunreinigungen mit und erzeugt erhebliche Bewegungen des Wassers innerhalb des Beckens.

Demgegenüber ermöglicht die Schnecke ein strömungsarmes und kontinuierliches Fördern der sedimentierten Stoffe aus der Vorrichtung heraus, wobei der geringe, freigegebene Querschnitt in der Abflußöffnung nur eine geringe Wasserströmung und damit nur geringe Strömungsschwankungen innerhalb des Behälters bewirkt.

Nachfolgend wird das erfindungsgemäße Verfahren und die erfindungsgemäße Vorrichtung anhand der Zeichnungen näher erläutert. Dabei zeigt
- Fig. 1: eine schematische Darstellung des Verfahrensablaufs und
- Fig. 2: ein Ausführungsbeispiel einer erfindungsgemäßen, den Separatoren nachgeschalteten Abscheidevorrichtung, wobei einige Teile weggebrochen sind,
- Fig. 3: eine zweite Ausführungsform der Vorrichtung von Fig. 2, wobei nur schematisch und ausschnittweise diese zweite Ausführungsform dargestellt ist,
- Fig. 4: ein Verfahrensschema ähnlich dem Schema von Fig. 1, wobei jedoch im Anschluß an den Separator eine zweite Behandlungsart vorgeschlagen wird und die
- Fig. 5 und 6: schematisch eine Vorrichtung ähnlich der Abscheidevorrichtung aus Fig. 2, wie sie jedoch beim Verfahren gemäß Fig. 4 verwendet werden kann.

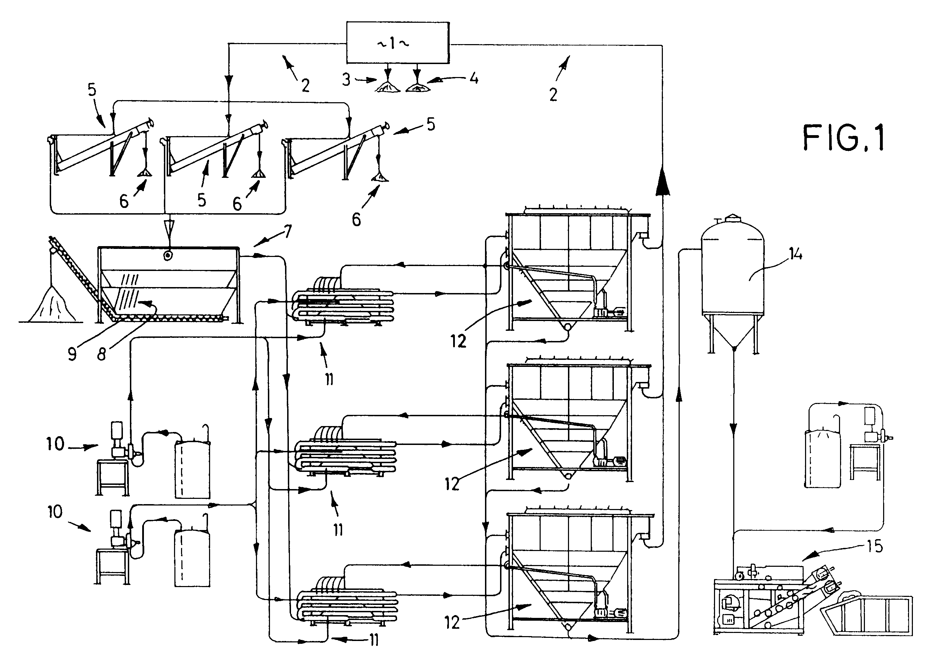

In den Zeichnungen ist in Fig. 1 eine Anlage zum Reinigen von Bauschutt dargestellt, wobei dieser Anlage eine Vorstufe 1 vorgeschaltet ist, die schematisch als Block dargestellt ist. In der Vorstufe 1 wird dem Bauschutt Wasser mittels einer Wasserleitung 2 zugeführt. Gröbere und größere Korngrößen werden bei der Vorstufe 1 in Grobsandbunkern 3, 4 gesammelt.

Der restliche Sandanteil verläßt die Vorstufe 1 und wird Sandschnecken 5 zugeführt. Die mittleren Korngrößen werden dabei in Sandbunkern 6 gesammelt, während das Restwasser Abfallstoffe wie polyzyklische Aromate, Öle und Schwermetalle, aber auch den Feinsand enthält.

Diesem Wasser wird üblicherweise ein Flockungsmittel zugegeben, welches die Schweb- und Trübstoffe in dem Wasser zum Ausflocken bringt, so daß diese abgezogen werden können. Dabei wurden bisher dem Wasser sowohl die Abfallstoffe als auch der Feinsand entzogen und als Abfall entsorgt. Das in Fig. 1 dargestellte Verfahren weist für das Restwasser jedoch zunächst die Behandlung in einem sogenannten Separator auf. Derartige Separatoren sind - beispielsweise aus der Lebensmittelindustrie - bekannt. Mit Hilfe eines solchen Separators können dem Wasser Sande bis zu einer Korngröße von ca 10 Mikron (= 10⁻⁶ m) entzogen werden, während bislang Sandkörner, die kleiner als 63 Mikron sind, in dem Restwasser zusammen mit Verunreinigungen als Abfall galten.

Der Separator 7 besteht dabei aus einer relativ groß bemessenen Absinkwanne, in der mehrere Lamellen 8 parallel zueinander und insgesamt schräg angeordnet sind. In der Praxis stehen diese Lamellen in einem Winkel von 50 - 60^{°} schräg. Der Lamellenabstand beträgt häufig ca. 2 cm, so daß sich insgesamt sehr kurze Absetzwege für die Feinstsande in der Flüssigkeit ergeben.

Die Menge und die Geschwindigkeit, mit der Wasser in den Separator ein- bzw. ausströmt - also die Verweildauer im Separator 7 - wird so eingestellt, daß innerhalb des Separators 7 eine möglichst laminare Strömung erzielt wird, so daß sich in der Absinkwanne die schweren Teilchen, nämlich der Feinstsand, langsam absetzen können. Demgegenüber werden leichtere Teilchen, nämlich die Verunreinigungen in Form von polyzyklischen Aromaten, Öl und auch Schwermetallen, durch die Strömungsgeschwindigkeit des Wassers in der Schwebe gehalten und aus dem Separator 7 mit dem Wasser ausgetragen.

Der Boden der Absinkwanne läuft konisch zu und bildet über seine ganze Länge an seiner tiefsten Stelle eine Rinne aus. In ihr erstreckt sich über ihre ganze Länge eine Förderschnecke 9, mit deren Hilfe der Feinsand abgefördert werden kann, der sich an der tiefsten Stelle im Separator 7 angesammelt hat. Im Gegensatz zu einer nur zeitweilig geöffneten Ventilklappe od. dgl. am Boden der Absinkwanne stört der Betrieb der Förderschnecke 9 die Strömungsverhältnisse nicht, die sich innerhalb des Separators 7 ausgebildet haben. Es kann daher ein gleichmäßiger und gleichwirkender Betrieb des Separators 7 gewährleistet werden.

Dieser Vergleichmäßigungseffekt kann dadurch unterstützt werden, daß die Förderschnecke 9 kontinuierlich und nicht intermittierend arbeitet. Der im Separator 7 abgeschiedene Feinsand wird zu einem entsprechenden Feinsandreservoir gefördert und kann anschließend als Baustoff wieder verwendet werden.

Das hinter dem Separator 7 anfallende Restwasser enthält nur noch die Verunreinigungen, u. a. die polyzyklischen Aromate, das Öl und die Schwermetallteilchen. Diesem Wasser können nun, wie bei 10 angedeutet, verschiedene Stoffe zugesetzt werden. Insbesondere kann ein Flockungsmittel zugesetzt werden. In einem nachgeschalteten Flockulator 11 werden dann die Flocken ausgebildet, die die Verunreinigungen aufnehmen. Die Menge des eingesetzten Flockungsmittels kann dabei zur Schonung der Umwelt geringer als bisher üblich bemessen sein, da der Feinsandanteil nicht ebenfalls ausgeflockt werden muß.

Eine nachgeschaltete Flotationsanlage 12 kann die derart ausgeflockten Verunreinigungen aus dem Wasser entfernen und einer Sammelstelle 14 zuführen.

Die gesammelten Abfälle können einer Filterpresse 15 zugeführt werden, die den Abfällen den Wasseranteil entzieht, das Gewicht der Abfallmenge dadurch verringert und auf diese Weise die Deponiekosten senkt. Das bei der Flotation angefallene gereinigte Wasser kann im Kreislauf geführt und über die Wasserleitung 2 der Vorstufe 1 wieder zugeführt werden. Da ein gewisser Wasserverlust innerhalb des Systems unvermeidlich ist, wird Frischwasser dem gesamten Verfahren beigefügt, so daß die für die Reinigung erforderliche Wassermenge stets sichergestellt ist.

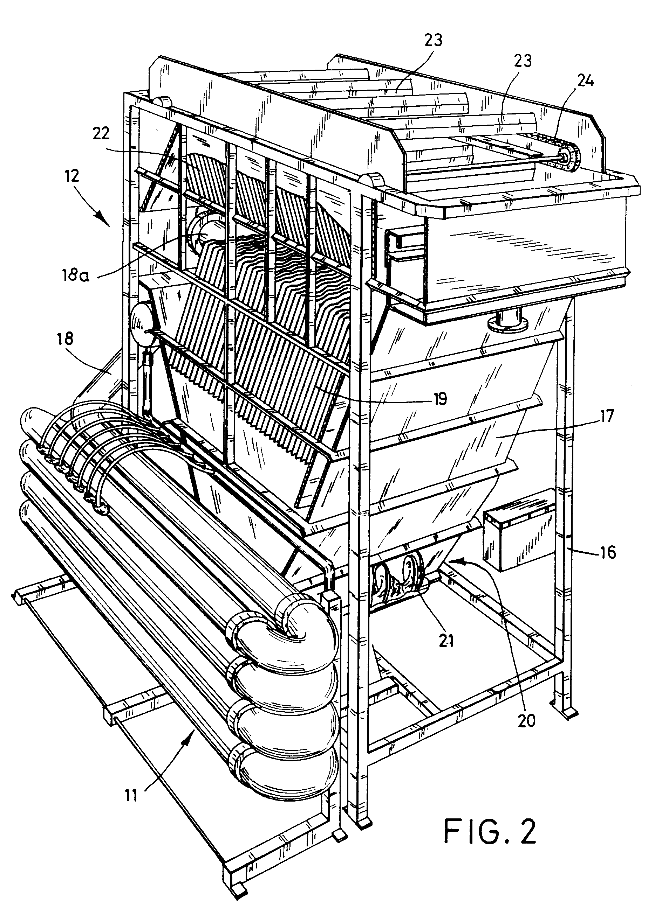

In Fig. 2 ist außer dem Flockulator 11 die Flotationsanlage 12 aus Fig. 1 dargestellt. Sie besteht im wesentlichen aus einem Gerüst 16 und einem in dem Gerüst 16 angeordneten Absinkbecken 17.

Das zu reinigende Wasser gelangt unten in den Flockulator 11, wobei das zugesetzte Flockungsmittel durch den schlangenförmigen Verlauf des Flockulators 11 genügend Zeit hat, aus den Verunreinigungen Flocken herzustellen. Anschließend wird das Wasser von dem Flockulator 11 über eine Zuleitung 18 und eine Einlaßöffnung 18a in das Absinkbecken 17 geleitet.

Durch das Flockungsmittel steigen die ausgeflockten Verunreinigungen auf, da dem gesamten System von unten ein Gas eingeblasen wird und die Flocken von den aufsteigenden Luftbläschen an die Oberfläche mitgenommen werden. Durch den Zusatz eines Koagulans sind jedoch auch schwerere Verunreinigungen in dem zu reinigenden Wasser zu Klumpen koaguliert. Diese koagulierten Verunreinigungen sinken in dem Absinkbecken 17 nach unten an Hauptlamellen 19 vorbei, die zu einer Strömungsberuhigung vorgesehen sind.

Das Absinkbecken 17 weist einen im wesentlichen V-förmigen Querschnitt auf und bildet mit seinem untersten Bereich eine Sammelrinne 20 aus, in der die koagulierten Verschmutzungen gesammelt werden. In der Sammelrinne 20 ist eine Förderschnecke 21 angeordnet, die entweder bei Bedarf oder kontinuierlich arbeitet.

Wenn die unten angesammelten Verunreinigungen abgelassen werden, geht ein regelrechter Stoß durch das im Absinkbecken 17 befindliche Wasser. Dieser Stoß verhindert, daß sich Verunreinigungen zwischen den Hauptlamellen 19 festsetzen und daß auf diese Weise die Hauptlamellen 19 zuwachsen und den Betrieb der gesamten Vorrichtung beeinträchtigen. Dieser Wasserstoß bewirkt jedoch auch unerwünschte Verwirbelungen im Absinkbecken 17.

Die Stärke des Stoßes kann durch die Förderschnecke 21 verringert werden, da die Schnecke 21 als offene Schnecke ausgebildet ist und vorteilhafterweise kontinuierlich die Verunreinigungen bis in die Nähe des Ablaßventiles fördert. Auf diese Weise ist es möglich, das Ablaßventil nur kurzfristig zu öffnen und den davor angesammelten Pfropfen von Verunreinigungen abzulassen. Das Ventil kann jedoch auch länger geöffnet werden, um die Verunreinigungen besonders gründlich auszutragen und die Wirkung des Stoßes im Wasser des Absinkbeckens 17 zu verstärken.

Je nach der verwendeten Wasserqualität und den darin enthaltenen Verunreinigungen und deren Eigenschaften kann die Stoßwelle stärker oder schwächer ausgebildet werden, wobei es - wie weiter unten noch erläutert werden wird - bei der in Fig. 2 dargestellten Vorrichtung möglich ist, die Stoßwelle besonders gering zu halten und einen gleichmäßigen ruhigen Betrieb der Vorrichtung zu ermöglichen, ohne daß das Ablassen der Verunreinigungen im Behältertiefsten eine größere Störung dieses Vorgangs bewirkt.

Die ausgeflockten Verunreinigungen steigen aufgrund der Einwirkung der Gasbläschen nach oben und passieren ebenfalls Lamellen 22, die jedoch kleiner ausgebildet sind als die Hauptlamellen 19. Die Abstände der einzelnen Lamellen 22 zueinander sind, wie auch ihre Höhe, ebenso von der gewünschten Reinigungswirkung abhängig wie ihr Verlauf. Sie können also in Abhängigkeit von den abzuscheidenden Stoffen wellenförmig, gerade, zickzackförmig, meanderförmig od. dgl. verlaufen.

Wie die Hauptlamellen 19 stehen diese oberen Lamellen 22 gegenüber der Vertikalen schräg. Dabei kann die Schrägstellung gegenüber der Vertikalen gleichsinnig wie die Schrägstellung der Hauptlamellen 19 erfolgen. Es können die oberen Lamellen 22 jedoch auch entgegengesetzt der Schrägstellung der Hauptlamellen 19 gegenüber der Vertikalen schräg stehen. Sie dienen als Widerstand gegenüber der Aufsteigsbewegung der ausgeflockten Verunreinigungen. Aufgrund der nachschiebenden Flocken von unten wird in der Flockenschicht zwischen den oberen Lamellen 10 ein Druck aufgebaut, der zum einen aus dem Gewicht der oberen Flockenschichten und zum zweiten aus dem Widerstand der schrägstehenden oberen Lamellen gegenüber der Bewegungsrichtung der nachsteigenden Flocken resultiert.

Auf diese Weise pressen sich die Flocken, und durch diesen Preßvorgang findet eine Wasserausscheidung statt, so daß die der Vorrichtung entnehmbaren Flocken einen Anteil an Trockenmasse von 30 bis 40 % aufweisen. Im Gegensatz dazu sind ohne die Verwendung dieser oberen Lamellen 22 üblicherweise Trockenanteile von etwa 10 % erzielbar, die durch ein anschließendes Pressen der Flocken auf etwa 20 % gesteigert werden können. Durch die erfindungsgemäße Vorrichtung kann daher sowohl ein nachgeschaltetes Pressen entfallen als auch ein insgesamt höherer Trocknungsgrad erzielt werden.

Die oberen Lamellen 22 erstrecken sich höher als der Wasserspiegel innerhalb der gesamten Vorrichtung. Die nach oben gedrückten Flocken werden also aus dem Bereich des Wassers hinaus nach oben über die Wasseroberfläche gedrückt, so daß hier ein besonders starker Entwässerungseffekt erzielt werden kann.

Die oberste Schicht, also die Flocken mit dem höchsten Trocknungsgrad, werden bei der dargestellten Vorrichtung mit Hilfe von Schabern 23 abgezogen. Die Schaber 23 sind an zwei umlaufenden Ketten 24 befestigt und laufen mit diesen um. Dabei ist eine bestimmte Geschwindigkeit der Schaber 23 einzuhalten, da falsche Umlaufgeschwindigkeiten die obersten trockensten Flocken in die oberen Lamellen 22 zurückdrücken oder die Flocken aus den oberen Lamellen 22 vorzeitig herausziehen können und so die Erzielung eines guten Trocknungsgrades verhindern.

Ebenso wie die Geschwindigkeit der Schaber 23 bewirkt die Höhe, der Abstand, der Verlauf und die Schrägstellung der oberen Lamellen unterschiedliche Ergebnisse, so daß die gewünschte Flockenkonsistenz mit Hilfe dieser verschiedenen Parameter eingestellt und den im Betrieb jeweils anfallenden Verunreinigungen angepaßt werden kann.

In Verbindung mit der im Behältertiefsten angeordneten Förderschnecke 21, die eine Vergleichmäßigung der Strömungsverhältnisse innerhalb des Absinkbeckens 17 unterstützt, bewirken die Anordnung und Ausbildung der oberen Lamellen 22 und der Schaber 23 einen gleichmäßigen Betrieb der Vorrichtung und gleichmäßige Ergebnisse, was die Menge und die Konsistenz der Abfallstoffe angeht.

Der Abscheidegrad der gesamten Vorrichtung wird durch die Stoßwelle und die dadurch entstehenden Verwirbelungen im Wasser herabgesetzt, so daß allgemein versucht wird, das Wasser so ruhig und laminar strömen zu lassen wie möglich. Durch die Stoßwellen und die dabei entstehenden Verwirbelungen werden Wellen an der Wasseroberfläche erzeugt.

Bei den über die Wasseroberfläche hinaus nach oben fortgeführten Lamellen 22 wird die Wasseroberfläche in eine Vielzahl von kleinen, abgeschlossenen Wasseroberflächen unterteilt, die sich bei einer gegebenen Anregung sehr viel schneller beruhigen als dies bei einer einheitlichen Wasseroberfläche im Absinkbecken 17 der Fall wäre. Gegenüber Lamellen, die maximal bis zur Wasseroberfläche reichen, wird bei dem dargestellten Gegenstand verhindert, daß Wellen über mehrere Lamellen laufen können.

Eine weitere Beruhigung des Wassers innerhalb des Absinkbeckens 17 wird durch die Förderschnecke 21 in der Sammelrinne 20 erzielt. Üblicherweise wird am Behältertiefsten ein Stutzen oder mehrere Stutzen mit jeweils einem Ventil angeordnet, wobei die abgesunkenen Stoffe durch diese Stutzen abgelassen werden können. Dies führt dazu, daß sich neben dem Stutzen bzw. zwischen mehreren Stutzen abgesunkenes Material anhäuft, welches in der Praxis teilweise bis an die Unterkante der Hauptlamellen 19 reichen kann und diese verstopfen kann.

Einer derartigen Haufenbildung kann zwar mit Rührern, Kratzern oder ähnlichen Werkzeugen entgegengewirkt werden, wobei diese jedoch die abgesunkenen Stoffe aufwirbeln. Auf diese Weise wird der Feststoffgehalt der abgesunkenen und abzuführenden Stoffe verringert. Ein hoher Feststoffgehalt ist jedoch wünschenswert, da entweder für ein Recycling eine möglichst große Materialreinheit erzielt werden soll, die durch den Wasseranteil verringert wird, oder da im Fall der Entsorgung das Gewicht der Abfallstoffe durch den Wasseranteil erheblich vergrößert wird, was bei einer Deponieentsorgung die Entsorgungskosten um das Maß des Wasseranteils verteuert.

Demgegenüber kann durch die dargestellte Förderschnecke 21 der Druckstoß beim Öffnen des Ablaßventils äußerst gering gehalten werden. Die Förderschnecke 21 wird üblicherweise nicht einfach durch die Behälterwand geführt, sondern durch einen Stutzen, dessen freien Querschnitt sie nahezu vollständig ausfüllt. Da zudem ein Pfropfen von Verunreinigungen vor dem Auslaß des Absinkbeckens 17 vorhanden ist, wird nur wenig Wasser beim Öffnen des Ablaßventils abgeführt, so daß dementsprechend ein nur schwacher Druckstoß aufgrund des nur sehr geringen Wasserverlustes entsteht.

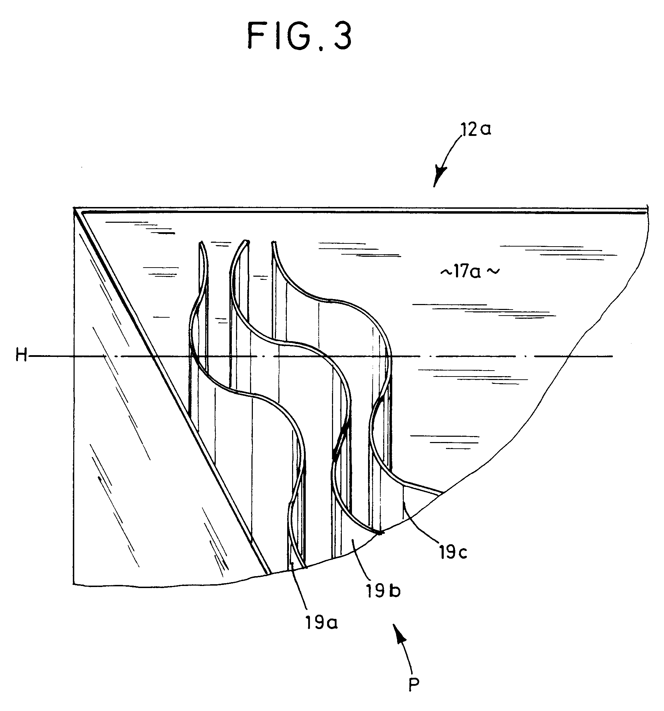

In Fig. 3 ist schematisch ein Ausschnitt aus einem zweiten Ausführungsbeispiel einer Flotationsanlage 12a dargestellt. Innerhalb der Wände des Absinkbeckens 17a sind Lamellen 19a, 19b und 19c angeordnet, die im Gegensatz zur Flotationsvorrichtung 12 nicht schräg, sondern senkrecht angeordnet sind. Die Lamellen 19a bis 19c sind sinusförmig gewellt.

Eine Hilfslinie H ist gestrichelt eingezeichnet und verläuft durch das Tiefste eines Wellentals der Lamelle 19a, die der Behälterwand am nächsten benachbart ist. Anhand dieser Hilfslinie H wird deutlich, daß die weiteren Lamellen 19b und 19c sowohl gegenüber der Lamelle 19a als auch untereinander versetzt angeordnet sind.

Das zu reinigende Wasser wird in Längsrichtung der Lamellen 19a, 19b und 19c horizontal zugeführt, so daß sich ein Durchflußpfad für die Flüssigkeit zwischen den Lamellen 19a, 19b und 19c ergibt, der eine ständig sich verändernde Breite aufweist. Hierdurch werden ständig unterschiedliche Strömungsgeschwindigkeiten zwischen den Lamellen erzielt und strömungsberuhigte Zonen geschaffen, in denen Verunreinigungen, die flotiert werden sollen, besonders leicht aufsteigen können.

Diese leichte Aufsteigmöglichkeit wird geringfügig eingeschränkt, wenn die Lamellen leicht schräg angeordnet sind, so daß sich zwischen der Anordnung der Lamellen in der Flotationsanlage 12 und der Anordnung der Lamellen in der Flotationsanlage 12a verschiedene Zwischenmöglichkeiten ergeben.

Während in Fig. 2 die Einlaßöffnung 18a nahezu senkrecht zur Ebene der Hauptlamelle 19 angeordnet ist, bewirkt die Ausbildung von versetzt angeordneten Lamellen mit wellenförmigem Verlauf in Verbindung mit einer Zuführung des Wassers in Längsrichtung der Lamellen den anhand von Fig. 3 erläuterten Effekt.

Dabei kann die Wellenform der Lamellen von der in den Fig. 2 und 3 dargestellten Sinusform abweichen, so daß auch eckige oder unregelmäßig geformte Wellenausbildungen der Lamellen denkbar sind. Wichtig ist lediglich ein derartiger Versatz der einzelnen Lamellen gegeneinander, daß Durchflußpfade für das Wasser zwischen den Lamellen geschaffen werden, die eine sich verändernde Breite aufweisen.

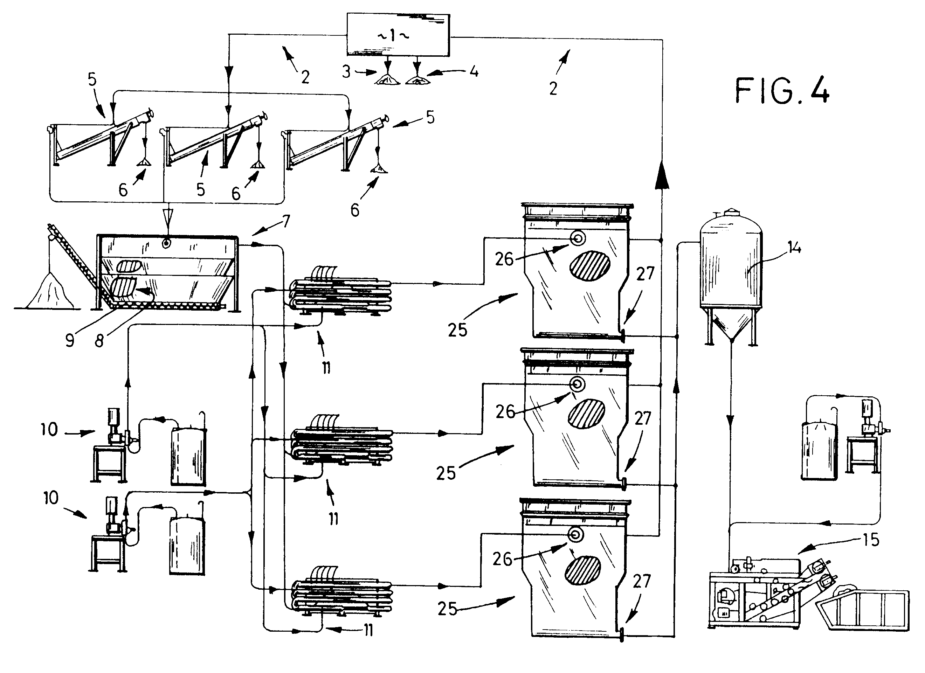

In Fig. 4 ist das erfindungsgemäße Verfahren unter Verwendung des aus der Lebensmittelindustrie bekannten Separators 7 dargestellt, wobei gleiche Bezugszeichen wie in Fig. 1 gleiche Komponenten bezeichnen. Im Anschluß an die Feinsandentfernung im Separator 7 werden dem Restwasser bei 10 Chemikalien zugesetzt, beispielsweise ein Flockungsmittel. Im Flockulator 11 bewirkt dieses Flockungsmittel die Ausbildung von Flocken, welche die restlichen Verunreinigungen aufnehmen. Dem Flockulator 11 nachgeschaltet ist eine Sedimentationsanlage 25 anstelle der Flotationsanlage 12 in Fig. 1. Die Sedimentationsanlage 25 verfügt über einen Wassereinlaß 26 sowie einen in Fig. 4 nicht bezeichneten Überlauf für das Klarwasser und eine Ablaßöffnung 27 für die sedimentierten Verunreinigungen. Das aus dem Klarwasserüberlauf entnommene Wasser wird der Wasserleitung 2 wieder zugeführt und so im Kreislauf geführt.

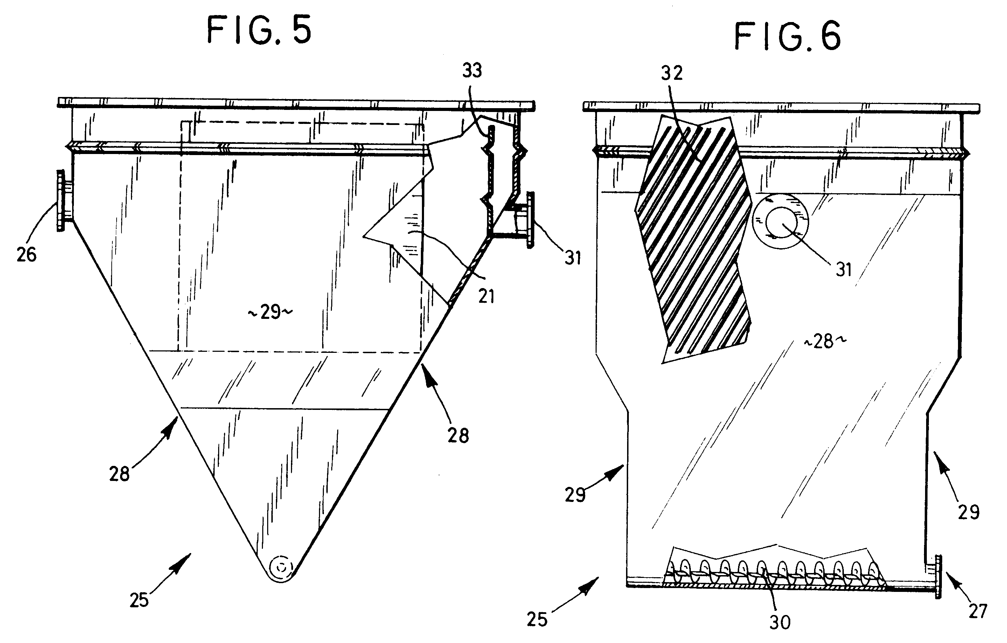

In den Fig. 5 und 6 ist ein Sedimentationsbecken 25 näher dargestellt. Das Sedimentationsbecken 25 verfügt über zwei schrägstehende Seitenwände 28 sowie über zwei im wesentlichen senkrecht verlaufende Stirnwände 29. Im Behältertiefsten kann eine Förderschnecke 30 ähnlich wie im Separator 7 angeordnet sein, um die Sedimentationsstoffe durch die Ablaßöffnung 27 abzufördern. Die Wasserzufuhr geschieht über die Einlaßöffnung 26 und der Wasserabfluß des Klarwassers erfolgt über einen Abfluß 31. Im Bereich des Klarwasserabflusses 31 können Abzugsvorrichtungen für ggf. aufschwimmende Flocken vorgesehen sein, die für die Sedimentation zu klein und zu leicht sind.

Innerhalb der Sedimentationsanlage 25 sind Lamellen 32 angeordnet, die in einem Winkel von beispielsweise 50 bis 60° schräg stehen können, wobei die genaue Größe, Anzahl, Schrägstellung und Packungsdichte der Lamellen von dem jeweils zu behandelnden Wassertyp und der Wasserqualität abhängt. Das Wasser gelangt über einen Klarwasserüberlauf 33 in den Abfluß 31.

Durch die im wesentlichen senkrecht verlaufenden Stirnwände 29 weist die Sedimentationsanlage 25 ein gegenüber dem Separator 7 und auch der Flotationsanlage 12 größeres Volumen auf, wobei der Knick in den Stirnwänden 29 es ermöglicht, die Sedimentationsanlage 25 in die gleichen Gerüste einzuhängen und dort zu befestigen, die ursprünglich zur Aufnahme kleinerer Behälter, z. B. der Flotationsanlage 12, vorgesehen sind.

## Patentansprüche

1. Verfahren zur Reinigung von Bauschutt, wobei dem Bauschutt Wasser zugegeben wird und das schutthaltige Wasser zunächst einer Vorstufe und dann einem Separator zugeführt wird zur Abscheidung grober und mittlerer Korngrößen von Sand, dadurch gekennzeichnet, daß das Wasser anschließend einem Separator (7) zugeführt wird, der in einer Absinkwanne eine Vielzahl von Lamellen aufweist, und daß anschließend dem Wasser Flockungsmittel zugegeben wird, daran anschließend in das Wasser Gas eingeleitet wird und dann die Flocken flotiert (bei 12) werden.

2. Verfahren nach Anspruch 1, dadurch gekennzeichnet, daß im Separator (7) der Feinsand kontinuierlich abgefördert wird.

3. Vorrichtung zur Durchführung des Verfahrens nach Anspruch 1 oder 2 mit einem Absinkbecken mit wenigstens zwei im Bereich des Absinkbeckens übereinander angeordneten Packungen von Lamellen, die jeweils gegenüber der Vertikalen schräggestellt sind, gekennzeichnet durch obere Lamellen (22), die über die Wasseroberfläche hinaus nach oben verlaufen sowie durch wenigstens einen Schaber (23), der oberhalb der oberen Lamellen (22) beweglich gelagert ist.

4. Vorrichtung nach Anspruch 3, gekennzeichnet durch mehrere umlaufende Schaber (23), die in Längsrichtung über das Absinkbecken (17) bewegbar sind.

5. Vorrichtung nach Anspruch 3 oder 4, gekennzeichnet durch ein sich konisch nach unten verjüngendes Absinkbecken (17), das an seinem untersten Bereich eine Sammelrinne (20) ausbildet, in der eine Förderschnecke (21) zum Abfördern gesunkener Stoffe angeordnet ist.

6. Vorrichtung nach einem der Ansprüche 3 bis 5, gekennzeichnet durch obere Lamellen (22), deren Schrägstellung der Schrägstellung der Hauptlamellen (19) entgegengesetzt ist.

## Claims

1. A process for cleaning rubble, water being added to the rubble and the rubble-containing water firstly being supplied to a preliminary stage and then to a separator for separating coarse and average grain sizes of sand, characterized in that the water is then supplied to a separator (7) comprising a plurality of lamellae in a settling tank, and in that flocculating agents are then added to the water, whereafter gas is introduced into the water and the flakes are then floated (at 12).

2. A process according to claim 1, characterized in that the fine sand is continuously conveyed away in the separator (7).

3. A device for implementing the process according to claim 1 or claim 2 with a settling tank with at least two packages of lamellae arranged one above the other in the area of the settling tank, which packages of lamellae are each arranged at an angle with respect to the vertical, characterized by upper lamellae (22), which run upwards beyond the water surface, as well as by at least one scraper (23), which is mounted movably above the upper lamellae (22).

4. A device according to claim 3, characterized by a plurality of revolving scrapers (23), which are movable in the longitudinal direction over the settling tank (17).

5. A device according to claim 3 or claim 4, characterized by a settling tank (17) tapering conically downwards and forming at its lowest area a collecting channel (20), in which a conveying screw (21) is arranged for conveying away settled substances.

6. A device according to any one of claims 3 to 5, characterized by upper lamellae (22), the inclined position of which is opposed to the inclined position of the main lamellae (19).

## Revendications

1. Procédé pour le nettoyage de décombres, dans lequel de l'eau est ajoutée aux décombres et l'eau contenant les décombres est d'abord amenée à un niveau préliminaire puis à un séparateur pour la séparation des grosses et moyennes particules de sable, caractérisé en ce que l'eau est ensuite amenée à un séparateur (7), qui présente dans un bassin de décantation une pluralité de lamelles, et en ce que des moyens de floculation sont ensuite ajoutés à l'eau, du gaz est ensuite introduit dans l'eau et les flocons subissent une flottation (en 12).

2. Procédé selon la revendication 1, caractérisé en ce que le sable fin est évacué en continu dans le séparateur (7).

3. Dispositif pour la mise en oeuvre du procédé selon la revendication 1 ou 2 avec un bassin de décantation avec au moins deux paquets de lamelles disposés l'un au-dessus de l'autre dans la zone du bassin de décantation, qui sont disposés en oblique par rapport à la verticale, caractérisé en ce qu'il comporte des lamelles supérieures (22) qui sont orientées vers le haut au-delà de la surface de l'eau ainsi que au moins un racloir (23) qui est supporté de manière mobile au-dessus des lamelles supérieures (22).

4. Dispositif selon la revendication 3, caractérisé en ce qu'il comporte plusieurs racloirs (23) rotatifs qui sont mobiles dans le sens longitudinal au-dessus du bassin de décantation (17).

5. Dispositif selon la revendication 3 ou 4, caractérisé en ce qu'il comporte un bassin de décantation (17) rétréci vers le bas de forme conique, qui forme dans son secteur inférieur une gouttière de collecte dans laquelle une vis sans fin (21) est disposée pour l'évacuation des matières tombées au fond.

6. Dispositif selon l'une ou l'ensemble des revendications 3 à 5, caractérisé en ce qu'il comporte des lamelles supérieures (22), dont l'obliquité est opposée à l'obliquité des lamelles principales (19).
